# NEW EUROPEAN PATENT SPECIFICATION

(11) **EP 2 348 560 B2**
(45) Date of publication and mention of the opposition decision: **20.07.2016**
(45) Mention of the grant of the patent: 26.06.2013
(21) Application number: 11000395.1
(22) Date of filing: 19.01.2011
(51) Int. Cl.: H01M 2/10, H01M 2/20, H01R 13/24

(54) **Battery contact spring**
Batteriekontaktfeder
Ressort de contact de batterie

(30) Priority: 23.01.2010 EP 10000671
(43) Date of publication of application: 27.07.2011
(73) Proprietor: Braun GmbH, 61476 Kronberg/Taunus (DE)
(72) Inventor: Vetter, Ingo, 31184 Karben (DE); Bornheimer, Heiko, 65205 Wiesbaden (DE); Baier, Florian, 60489 Frankfurt/Main (DE); Lepper, Joachim, 61250 Usingen (DE); Utsch, Jörn, 65812 Bad Soden (DE)
(74) Representative: Schneider, Stefan Michael

(56) References cited:
- US-A- 2 536 698
- US-A- 5 017 443
- US-A1- 2002 155 344
- US-A1- 2003 044 676
- US-A1- 2004 017 179
- US-A1- 2005 035 512
- US-A1- 2005 035 512
- US-A1- 2005 197 903
- US-A1- 2008 166 629
- US-B1- 6 293 819

## Description

### FIELD OF THE INVENTION

The present invention is concerned with a battery contact spring, in particular for battery-operated small devices and a battery-operated small device with such a battery contact spring.

### BACKGROUND OF THE INVENTION

Battery contact springs are built into the battery receptacle of, for example, battery-operated toothbrushes. Such battery contact springs may be used to establish an electrical connection between the contact zones on the battery and the switch on the device. Such battery contact springs are typically designed so that when a sufficient contact pressure is maintained, they also provide a length compensation effect to balance the length tolerances of the battery and the construction of the receptacle, as shown for example in United States Patent Application Publications US 2003/0044676 A1, US 2004/0017179 A1, and US 2005/0033512 A1.

Battery contact springs are typically made of a stainless steel spring material, for example 1.4310 (X10CrNi18-8). This material has proven itself in the past in terms of its resistance to corrosion and its spring properties. This material can be made into wire or a flat material.

### SUMMARY OF THE INVENTION

There is a desire to provide a battery contact spring that can be made of an inexpensive and available raw material in an advantageous production manner, and which has advantageous operating performance.

The aforementioned desire is satisfied by a battery contact spring according to Claim 1.

The proposed battery contact spring has a spring body manufactured from wire, in particular this may be a single wire that is bent to form the battery contact spring. The spring body has the following components:
- a first contact head section for contacting a first contact region, in particular of a first battery;
- a second contact head section for contacting a second contact region, in particular a second battery; and
- a first spiral spring section that extends between a spring foot area and the first contact head section and flexibly supports the first head section.

The wire forming the first spiral spring section starts in the spring foot area and continues into the first contact head section. According to an embodiment, the battery contact spring has a second spiral spring section that extends between a spring foot area and the second contact head section and flexibly supports the second head section.

This allows the battery contact spring to be produced in a simple and cost-efficient manner. The battery contact spring is further characterized by good spring characteristics and low inherent resistance between the contact heads. The suggested battery contact spring can be used in common battery receptacles without any need for major modification. The battery contact spring may comprise an anchoring structure arranged in the spring foot area for mounting the battery contact spring in a battery receptacle. The battery contact spring's mechanical properties are barely changed by the proposed design. Battery contact springs can be made using common manufacturing processes. The battery contact spring's electrical properties are better than those of conventional constructions. In one exemplary embodiment, the proposed battery contact spring, which typically may be manufactured from approximately 25 cm of a spring steel wire, now has only a wire length that is effective for the current transport between the contact regions contacted by the contact head sections that is given by the length of the connection bridge (hence, this distance approximately corresponds to the center-to-center distance of the contact regions, i.e., approximately the battery diameter in case two batteries of the same type are contacted). Then, an internal resistance of only approximately 30 milliohms (30 mΩ) may result. This low internal resistance leads, in particular for devices with high power requirements, to a substantial improvement in the degreeof battery efficiency. As a result, operating times of the battery-operated devices can be prolonged by up to 20%.

In other words, the suggested battery contact spring differs from known battery contact springs in that the contact head sections are connected only by a short connection bridge and each contact head section has a spiral spring section extending from the contact head section towards a respective spring foot end (i.e., to an end opposite the contact head section). As is known, the spiral spring sections are used in order to elastically (i.e., flexibly) support the contact head sections (e.g. to balance out tolerance in battery length or receptacle dimensions and further to bias the contact head sections against the contact regions). According to the invention, the general direction of extension of the spiral spring sections is perpendicular to the direction of extension of the connection bridge between the contact head sections. In known battery contact springs, the ends of the connection bridge always cross over into spiral spring sections, on whose respective foot ends the contact head sections for contacting the batteries are arranged, so that a current flows through the entire length of the wire between the contact head sections; in the case of the proposed battery contact spring, the current has to flow only through the short connection bridge.

The connection bridge is in particular realized as a straight bridge (i.e. a straight piece of wire even though it is possible to design special geometries into the connection bridge that, for example, secure the battery contact spring to a battery housing or which bypass a battery compartment wall.

According to an embodiment, the first contact head section is carried out as a convex bow section that bulges out towards the battery. This bow section may be aligned with the direction of the connection bridge. According to an embodiment, the second contact head section is also realized as a convex bow section bulges out towards the battery.

The first and/or second spiral spring section can be realized as a conical spiral spring coil, i.e. as a spiral spring that conically taper from a larger diameter foot to a small diameter top that connects with the contact head section. Typically, the spiral spring sections may be designed with three, four or five spring windings.

The battery contact spring may com prise an additional connection bridge connecting the ends of the wire electrically (i.e. the foots of the spiral springs are also connected by a connecting brisdge). This additional connection bridge can be manufactured directly by using corresponding ends of the wire material that forms the spiral spring sections. As a result, connecting the other spring wire material in parallel provides an even further reduced battery-coupling resistance.

In an embodiment, at least a contact head section is realized as a (flat) spiral.

The invention also relates to a battery-operated small device (that can be held in the hand), in particular an electric toothbrush or an electric shaver that is provided comprising a proposed battery contact spring.

### BRIEF DESCRIPTION OF THE DRAWINGS

The proposed battery contact spring is further elucidated by a detailed description of an exemplary embodiment and by reference to figures. In the figures
- Fig. 1: is a perspective depiction of a battery contact spring as proposed and
- Fig. 2: is a schematic diagram demonstrating the operating performance of a battery contactspring according to the invention compared to a conventional battery contact spring.

### DETAILED DESCRIPTION OF THE INVENTION

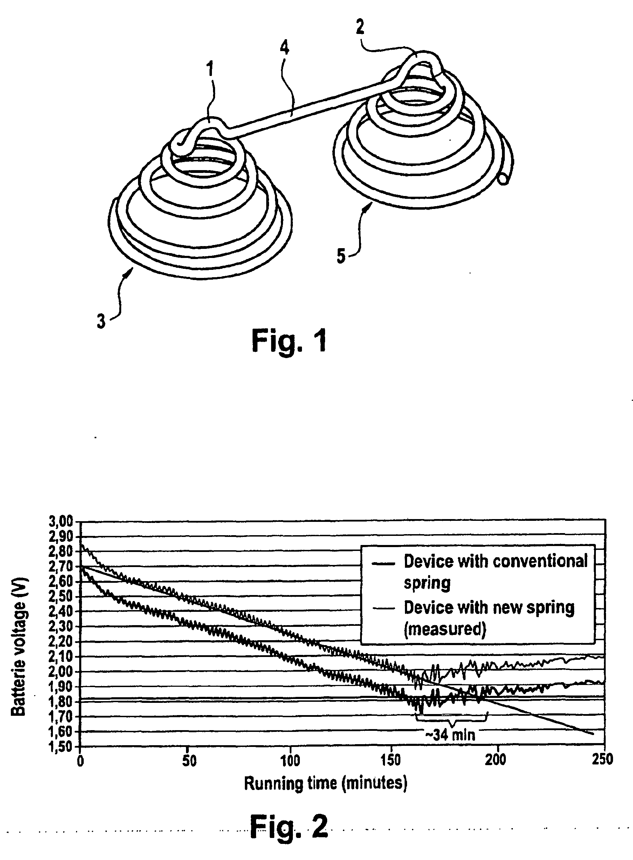

Figure 1 is a perspective depiction of an exemplary embodiment of a battery contact spring as. proposed. This battery contact spring has a spring body made from wire, in particular from a single wire, which was bent into the form as visible in Fig. 1. The spring body comprises a first contact head section 1 for contacting a first battery. The spring body further comprises a second contact head section for contacting a second battery. The battery contact spring can be mounted in a battery compartment of a small device, for example an electric toothbrush or an electric shaver.

The spring body also comprises a first spiral spring section 3 that extends between a spring foot area (in this case realized by the bottom winding of the first spiral spring section 3) and the first contact head section 1. The first spiral spring section 3 is arranged to flexibly support the first contact head section 1, i.e. when mounted into a battery receptacle, the first contact head section 1 is thus flexibly supported against the receptacle wall and can be biased against a contact region of the first battery.

The spring body is designed in such a way that the wire forming the winding(s) of the first spiral spring section 3 merges into the wire of the first contact head section 1. A connection bridge 4 is attached to the first contact head section 1. The connection bridge 4 crosses over into the second contact head section 2 and thus directly connects the two head sections 2.

In the exemplary embodiment shown here, the second contact head section 2 is supported by a second spiral spring section 5 in identical manner as the first contact head section 1 is supports by the first spiral spring section 3. The connection bridge 4 is realized out as ay straight wire piece.

In this exemplary embodiment, both the first contact head section 1 and the second contact head section 2 are realized as convex sections bulging out toward the battery (i.e. bulging away from the respective spiral spring sections 3 and 5).

The first and second spiral spring sections 3 and 5 are here each realized as conical spiral springs having several windings, where the windings have a larger diameter at the spring foot area than near the contact head sections (i.e. the spiral spring section conically taper from the spring foot area to the contact head sections). In the exemplary embodiment shown here, spiral spring sections 3 and 5 comprise a total of four spring windings, wherein the number of spring windings can be freely chosen and may be determined by parameters such as the available construction volume and the desired flexibility.

Figure 2 shows in a schematic manner the time curve of the voltage tapped by means of the battery contact springs. In this connection, the top graph schematically indicates the voltage available to the device when the proposed battery contact spring is used. The bottom graph indicates the voltage curve when a conventional battery contact spring is used. As is clear from this schematic diagram, use of the suggested battery contact springs makes it possible to significantly extend the running time (in this schematic instance: 34 minutes) of a battery-operated small device.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A battery contact spring with a spring body manufactured from wire:
a first contact head section (1);
a second contact head section (2);
at least a first spiral spring section (3) extending between a spring foot area and the first contact head section (1), which first spiral spring section (3) is arranged to flexibly support the first contact head section (1);
wherein the wire forming the first spiral spring section starts in the spring foot area and continues into the first contact head section;
further comprising a second spiral spring section (3) extending between a spring foot area and the second contact head section (1), which second spiral spring section (3) is arranged to flexibly support the second contact head section (1), wherein the wire of the second spiral spring section starts in the spring foot area and continues into the second contact head section; and
wherein the at least first spiral spring section (3) is perpendicular to the direction of extension of the connection bridge between the first and second contact head sections;
**characterized in that** a connection bridge (4) directly connecting the first contact head section (1) and the second contact head section (2) such that in operation, when the battery contact spring contacts a first battery at the first contact head section (1) and a second battery at the second contact head section (2), a current flows only through the connection bridge (4) but not through the first and second spiral spring sections (3).

2. The battery contact spring according to Claim 1, wherein the connection bridge (4) is a straight wire bridge,

3. The battery contact spring according to one of Claims 1 to 2, wherein the first contact head section (1) is realized as a convex section bulging outwards from the first spiral spring section (3).

4. The battery contact spring according to Claim 3, wherein the second contact head section (2) is carried out as a convex bow section bulging out away from the second spiral spring section (5).

5. The battery contact spring according to one of Claims 1 to 4, wherein the first spiral spring section (3) is realized as a conical spiral spring coil being wide at the spring foot area and conically tapering towards the first contact head section.

6. The battery contact spring according to one of Claims 1 to 5, wherein the first spiral spring section (3) has three, four or five spring windings.

7. The battery contact spring according to one of Claims 1 to 6, wherein the first spiral spring section has an anchoring structure in the spring foot area, which anchoring structure is suitable for anchoring the battery contact spring to a battery receptacle.

8. The battery contact spring according to one of Claims 1 to 7, wherein the battery contact spring is manufactured from a single wire.

9. The battery contact spring according to Claim 8, wherein the first end of the wire is provided at the spring foot area of the first spiral spring section (3) and the second end of the wire is provided at the spring foot area of the second spiral spring section (4).

10. The battery contact spring according to one of Claims 1 to 9, **characterized in that** in operation, when the battery contact spring contacts a first battery at the first contact head section (1) and a second battery at the second contact head section (2), a current flows only through the connection bridge (4) but not through the first or second spiral spring sections (3, 4).

11. A battery-operated small device, in particular an electric toothbrush or electric shaver, having a battery contact spring according to one of Claims 1 to 10.

## Patentansprüche

1. Batteriekontaktfeder mit einem Federkörper, hergestellt aus Draht,
einem ersten Kontaktkopfabschnitt (1),
einem zweiten Kontaktkopfabschnitt (2),
mindestens einem ersten Spiralfederabschnitt (3), der zwischen einem Federfußbereich und dem ersten Kontaktkopfabschnitt (1) verläuft, wobei der erste Spiralfederabschnitt (3) so angeordnet ist, dass er den ersten Kontaktkopfabschnitt (1) flexibel stützt,
wobei der Draht, der den ersten Spiralfederabschnitt bildet, im Federfußbereich beginnt und in den ersten Kontaktkopfabschnitt reicht,
ferner umfassend einen zweiten Spiralfederabschnitt (3), der zwischen einem Federfußbereich und dem zweiten Kontaktkopfabschnitt (1) verläuft, wobei der zweite Spiralfederabschnitt (3) so angeordnet ist, dass er den zweiten Kontaktkopfabschnitt (1) flexibel stützt, wobei der Draht des zweiten Spiralfederabschnitts im Federfußbereich beginnt und in den zweiten Kontaktkopfabschnitt reicht, und
wobei der mindestens erste Spiralfederabschnitt (3) senkrecht zur Ausdehnungsrichtung der Verbindungsbrücke zwischen dem ersten und dem zweiten Kontaktkopfabschnitt ist,
**dadurch gekennzeichnet, dass** eine Verbindungsbrücke (4) den ersten Kontaktkopfabschnitt (1) und den zweiten Kontaktkopfabschnitt (2) direkt verbindet, so dass bei Betrieb, wenn die Batteriekontaktfeder eine erste Batterie am ersten Kontaktkopfabschnitt (1) und eine zweite Batterie am zweiten Kontaktkopfabschnitt (2) berührt, ein Strom nur durch die Verbindungsbrücke (4), jedoch nicht durch den ersten und den zweiten Spiralfederabschnitt (3) fließt.

2. Batteriekontaktfeder nach Anspruch 1, wobei die Verbindungsbrücke (4) eine gerade Drahtbrücke ist.

3. Batteriekontaktfeder nach einem der Ansprüche 1 bis 2, wobei der erste Kontaktkopfabschnitt (1) als konvexer Abschnitt ausgeführt ist, der vom ersten Spiralfederabschnitt (3) nach außen hervorragt.

4. Batteriekontaktfeder nach Anspruch 3, wobei der zweite Kontaktkopfabschnitt (2) als konvexer Bogenabschnitt ausgeführt ist, der vom zweiten Spiralfederabschnitt (5) nach außen hervorragt.

5. Batteriekontaktfeder nach einem der Ansprüche 1 bis 4, wobei der erste Spiralfederabschnitt (3) als kegelförmige Spiralfederschlange ausgeführt ist, die im Federfußbereich breit ist und sich zum ersten Kontaktkopfabschnitt hin kegelförmig verjüngt.

6. Batteriekontaktfeder nach einem der Ansprüche 1 bis 5, wobei der erste Spiralfederabschnitt (3) drei, vier oder fünf Federwicklungen aufweist.

7. Batteriekontaktfeder nach einem der Ansprüche 1 bis 6, wobei der erste Spiralfederabschnitt eine Verankerungsstruktur im Federfußbereich aufweist, wobei die Verankerungsstruktur zum Verankern der Batteriekontaktfeder an einer Batteriefassung geeignet ist.

8. Batteriekontaktfeder nach einem der Ansprüche 1 bis 7, wobei die Batteriekontaktfeder aus einem einzelnen Draht hergestellt ist.

9. Batteriekontaktfeder nach Anspruch 8, wobei das erste Ende des Drahts am Federfußbereich des ersten Spiralfederabschnitts (3) bereitgestellt ist und das zweite Ende des Drahts am Federfußbereich des zweiten Spiralfederabschnitts (4) bereitgestellt ist.

10. Batteriekontaktfeder nach einem der Ansprüche 1 bis 9, **dadurch gekennzeichnet, dass** bei Betrieb, wenn die Batteriekontaktfeder eine erste Batterie am ersten Kontaktkopfabschnitt (1) und eine zweite Batterie am zweiten Kontaktkopfabschnitt (2) berührt, ein Strom nur durch die Verbindungsbrücke (4), jedoch nicht durch den ersten oder zweiten Spiralfederabschnitt (3, 4) fließt.

11. Batteriebetriebene, kleine Vorrichtung, insbesondere eine elektrische Zahnbürste oder ein Elektrorasierer, mit einer Batteriekontaktfeder nach einem der Ansprüche 1 bis 10.

## Revendications

1. Ressort de contact de batterie avec un corps de ressort fabriqué à partir d'un fil :
une première section de tête de contact (1) ;
une seconde section de tête de contact (2) ;
au moins une première section de ressort en spirale (3) s'étendant entre une zone de pied de ressort et la première section de tête de contact (1), laquelle première section de ressort en spirale (3) est agencée pour supporter de façon flexible la première section de tête de contact (1) ;
dans lequel le fil formant la première section de ressort en spirale commence dans la zone de pied de ressort et continue dans la première section de tête de contact ;
comprenant en outre une seconde section de ressort en spirale (3) s'étendant entre une zone de pied de ressort et la seconde section de tête de contact (1), laquelle seconde section de ressort en spirale (3) est agencée pour supporter de façon flexible la seconde section de tête de contact (1), dans lequel le fil de la seconde section de ressort en spirale commence dans la zone de pied de ressort et continue dans la seconde section de tête de contact ; et
dans lequel ladite au moins une première section en spirale (3) est perpendiculaire à la direction d'extension du pont de liaison entre les première et seconde sections de tête de contact ;
**caractérisé en ce qu**'un pont de liaison (4) relie directement la première section de tête de contact (1) et la seconde section de tête de contact (2) de telle sorte que, en fonctionnement, lorsque le ressort de contact de batterie est en contact avec une première batterie au niveau de la première section de tête de contact (1) et une seconde batterie au niveau de la seconde section de tête de contact (2), un courant circule uniquement à travers le pont de liaison (4), mais pas à travers la première et la seconde section de ressort en spirale (3).

2. Ressort de contact de batterie selon la revendication 1, dans lequel le pont de liaison (4) est un pont de fil rectiligne.

3. Ressort de contact de batterie selon l'une des revendications 1 à 2, dans lequel la première section de tête de contact (1) est réalisée sous la forme d'une section convexe bombée vers l'extérieur à partir de la première section de ressort en spirale (3).

4. Ressort de contact de batterie selon la revendication 3, dans lequel la seconde section de tête de contact (2) est réalisée sous la forme d'une section d'arc convexe bombée vers l'extérieur à distance de la deuxième section de ressort en spirale (5).

5. Ressort de contact de batterie selon l'une des revendications 1 à 4, dans lequel la première section de ressort en spirale (3) est réalisée sous la forme d'une spire de ressort en spirale conique qui est large au niveau de la zone de pied de ressort et s'effile de manière conique vers la première section de tête de contact.

6. Ressort de contact de batterie selon l'une des revendications 1 à 5, dans lequel la première section de ressort en spirale (3) a trois, quatre ou cinq spires de ressort.

7. Ressort de contact de batterie selon l'une des revendications 1 à 6, dans lequel la première section de ressort en spirale possède une structure d'ancrage dans la zone de pied de ressort, laquelle structure d'ancrage est appropriée pour ancrer le ressort de contact de batterie à un réceptacle de batterie

8. Ressort de contact de batterie selon l'une des revendications 1 à 7, dans lequel le ressort de contact de batterie est fabriqué à partir d'un fil unique.

9. Ressort de contact de batterie selon la revendication 8, dans lequel la première extrémité du fil est située au niveau de la zone de pied de ressort de la première section de ressort en spirale (3) et la seconde extrémité du fil est située au niveau de la zone de pied de ressort de la seconde section de ressort en spirale (4).

10. Ressort de contact de batterie selon l'une des revendications 1 à 9, **caractérisé en ce que,** en fonctionnement, lorsque le ressort de contact de batterie est en contact avec une première batterie au niveau de la première section de tête de contact (1) et une seconde batterie au niveau de la seconde section de tête de contact (2), un courant circule uniquement à travers le pont de liaison (4), mais pas à travers les première ou seconde sections de ressort en spirale (3, 4).

11. Petit dispositif fonctionnant sur batterie, en particulier une brosse à dents électrique ou un rasoir électrique, comportant un ressort de contact de batterie selon l'une quelconque des revendications 1 à 10.
